# DEMANDE DE BREVET EUROPEEN

(11) **EP 1 262 884 A1**
(43) Date de publication de la demande: **04.12.2002**
(21) Numéro de dépôt: 02077044.2
(22) Date de dépôt: 24.05.2002
(51) Int. Cl.: G06F 17/30

(54) **Génération d'une description dans un langage de balisage d'une structure d'un contenu multimédia**

(30) Priorité: 31.05.2001 FR 0107170
(71) Demandeur: Koninklijke Philips Electronics N.V., 5621 BA Eindhoven (NL)
(72) Inventeur: Mory, Benoit, Societe Civile S.P.I.D., 75008 Paris (FR); Llach, Joan, Societe Civile S.P.I.D., 75008 Paris (FR)
(74) Mandataire: de la Fouchardière, Marie-Noelle

(57) **Abrégé**

L'invention propose un équipement qui permet de générer une description d'une structure d'un contenu multimédia, par exemple d'une vidéo. Conformément à l'invention une structure initiale imparfaite est générée à partir d'un algorithme d'extraction automatique connu en soi. L'équipement comporte des moyens d'affichage d'une représentation visuelle de la structure obtenue, et des moyens de manipulation graphique pour la modifier. La description de la structure est mise à jour pour prendre en compte ces modifications.

Application : MPEG-7 ; description de vidéo

## Description

### Domaine de l'invention

L'invention concerne un équipement comportant des moyens pour générer une description dans un langage de balisage d'une structure d'un contenu multimédia comportant des prises de vue.

L'invention concerne aussi une méthode de génération d'une description dans un langage de balisage d'une structure d'un contenu multimédia comportant des prises de vue.

Elle concerne aussi un programme comportant des instructions pour générer une description dans un langage de balisage d'une structure d'un contenu multimédia comportant des prises de vue, lorsqu'il est exécuté par un processeur.

L'invention permet notamment de générer des descriptions, conformes à la norme MPEG-7, de contenus multimédia par exemple de vidéo. De telles descriptions facilitent l'exploitation du contenu multimédia. Elles permettent par exemple de faire de la recherche.

### Arrière plan technologique de l'invention

L'article intitulé « Analysis of Video Content for Multi-Layer Navigation of Multimedia Documents » publié par M. Bonnet, A. Bugatti, R. Leonardi et P. Migliorati, dans le cadre de la conférence «Int. Workshop on Very Low Bitrate Video, VLBV'99, Kyoto, Japan, October 29-30, 1999 », décrit un outil d'extraction automatique qui permet de générer une structure d'un document vidéo. Cette structure est une structure temporelle du type table des matières. Elle est par exemple décrite dans un document conforme à la norme MPEG-7.

MPEG-7 est une norme de description de contenus multimédia. Cette norme définit notamment des schémas de description et des descripteurs. Les descriptions qui sont conformes à la norme MPEG-7 sont des instances de ces schémas de description. Elles sont écrites dans un langage de balisage appelé XML et défini par le consortium W3C.

La structure qui est fournie par ce type d'outil d'extraction est nécessairement imparfaite puisqu'elle est obtenue de façon automatique. L'invention a notamment pour but de proposer un outil convivial qui permette d'améliorer la structure obtenue.

### Résumé de l'invention

Conformément à l'invention, un équipement tel que décrit dans le paragraphe introductif est caractérisé en ce qu'il comporte :
- des moyens d'affichage d'une représentation visuelle d'au moins une partie de ladite structure, ladite représentation visuelle comportant des images représentatives de prises de vue,
- des moyens graphiques de manipulation de ladite représentation visuelle pour apporter des modifications à ladite structure,
- des moyens de mise à jour de ladite description pour prendre en compte lesdites modifications.

Ainsi, l'invention propose un outil convivial permettant à un opérateur de modifier une structure initiale fournie par un outil d'extraction automatique. La représentation visuelle permet à l'opérateur d'appréhender le contenu de la structure. Cela facilite la détermination des modifications à apporter à la structure courante.

L'invention concerne par exemple des structures temporelles de type tables des matières dans lesquelles les prises de vue sont ordonnées de façon chronologique, ou des structures hiérarchiques de type index dans lesquelles les prises de vue sont regroupées par thèmes, sous-thèmes, mots clés, etc..., une même prise de vue pouvant apparaître dans plusieurs rubriques à la fois.

Les moyens graphiques de manipulation comportent avantageusement des moyens de sélection, de coupage, de collage et de copiage des prises de vue de ladite représentation visuelle. Ils comportent également des moyens pour poser et pour supprimer des délimitations entre les prises de vue de ladite représentation visuelle.

De façon avantageuse, un équipement selon l'invention comporte des moyens d'affichage d'une représentation arborescente d'au moins une partie de ladite structure et des moyens de mise à jour de ladite représentation arborescente pour prendre en compte lesdites modifications.

Une telle représentation arborescente permet à l'opérateur d'avoir une vision globale de la structure. Avantageusement l'opérateur peut visualiser simultanément la représentation visuelle et le représentation arborescente correspondante.

Typiquement une telle représentation arborescente comporte des noeuds, des branches et des feuilles. Avantageusement, un équipement selon l'invention comporte des moyens pour développer ou pour résumer une ou plusieurs desdites branches, une branche résumée étant représentée par une seule image dans ladite représentation visuelle.

L'opérateur peut choisir de développer une seule, plusieurs ou toutes les branches de la représentation arborescente selon ses besoins. La représentation visuelle est adaptée en conséquence. L'opérateur a ainsi la possibilité d'obtenir différentes vues, plus ou moins extensives, de ladite structure.

De façon avantageuse, un équipement selon l'invention comporte des moyens d'édition pour annoter ladite description. Certaines annotations sont saisies manuellement par l'opérateur (par exemple les annotations du type quelle personne, quelle action, quel objet, quand, où, comment, pourquoi...), d'autres sont fournies par un algorithme externe lancé par l'opérateur (par exemple des annotations du type mouvement de caméra, histogramme de couleurs...).

### Brève description des dessins

L'invention sera mieux comprise et d'autres détails apparaîtront dans la description qui va suivre en regard des dessins annexés qui sont donnés à titre d'exemples non limitatifs et dans lesquels :
- la figure 1 est un schéma en blocs décrivant les fonctionnalités d'un exemple d'équipement selon l'invention,
- la figure 2 est un schéma en blocs d'un exemple d'équipement selon l'invention,
- la figure 3 est un schéma d'un exemple de représentation visuelle selon l'invention,
- la figure 4 est un schéma d'un exemple de représentation arborescente selon l'invention.

### Description d'un mode de réalisation préférentiel

Un équipement selon l'invention permet à un opérateur de générer une description d'une structure d'un contenu multimédia. D'une façon générale, la structure d'un contenu multimédia comporte un ou plusieurs niveaux hiérarchiques. Dans la suite, pour simplifier l'exposé, on décrit une structure a un niveau hiérarchique. Ceci n'est pas limitatif.

Le contenu multimédia qui est considéré ici contient des prises de vue. Une prise de vue est une séquence de trames vidéo consécutives, générées par une opération continue, et représentant une action continue dans le temps et dans l'espace.

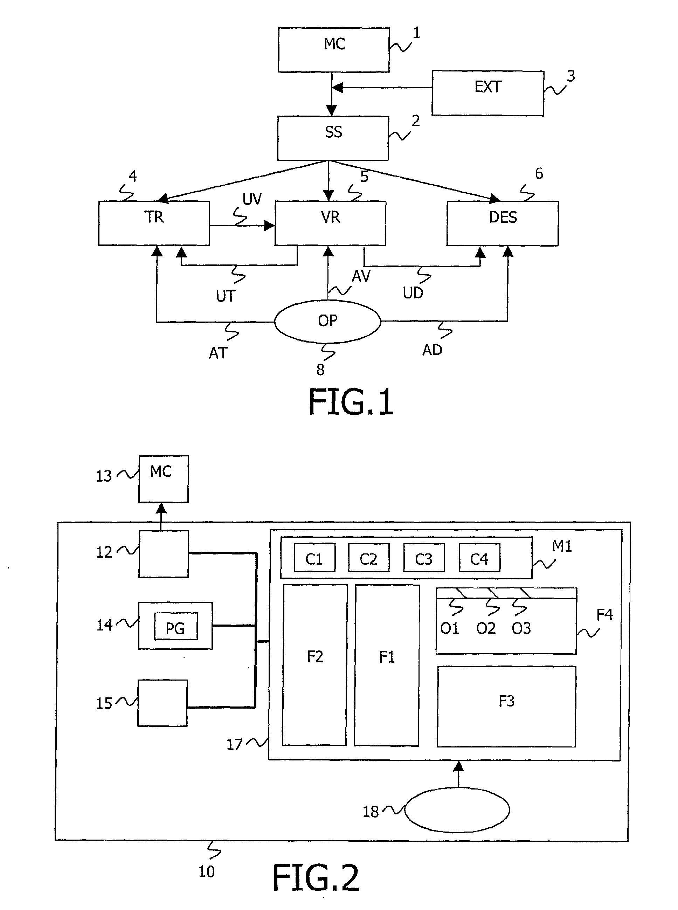

La figure 1 est un diagramme en blocs décrivant les fonctionnalités d'un mode de réalisation préférentiel d'un équipement selon l'invention. Sur la figure 1, un bloc 1 représente un contenu multimédia MC qui contient des prises de vue. Le contenu multimédia MC est par exemple constitué par une vidéo. Un bloc 2 représente une structure SS du contenu multimédia MC. Une structure initiale est générée à partir du contenu multimédia MC en utilisant un outil d'extraction automatique EXT connu en soi et représenté par un bloc 3. L'équipement selon l'invention génère :
- une représentation arborescente TR de la structure SS, représentée par un bloc 4,
- une représentation visuelle VR de la structure SS, représentée par un bloc 5,
- une description DES de la structure SS, représentée par un bloc 6.

L'équipement selon l'invention met à la disposition d'un opérateur OP, représenté par un bloc 8, des moyens pour agir sur la représentation visuelle VR, sur la représentation arborescente TR et sur la description DES. Sur la figure 1, l'action de l'opérateur OP sur la représentation visuelle VR est symbolisée par une flèche AV. Cette action consiste à manipuler la représentation visuelle VR de façon à modifier la structure SS. A la suite d'une telle modification, la représentation arborescente TR et la description DES sont mises à jour. Ces mises à jour sont symbolisées par les flèches UT et UD. L'action de l'opérateur sur la représentation arborescente est symbolisée par une flèche AT. Cette action consiste à modifier la représentation arborescente de façon à obtenir une autre vue de la structure SS. Elle entraîne une mise à jour de la représentation visuelle VR. Cette mise à jour est symbolisée par une flèche UV sur la figure 1. Enfin l'action de l'opérateur OP sur la description DES est symbolisée par une flèche AD. Cette action consiste à annoter la description DES.

Sur la figure 2 on a représenté un exemple d'équipement selon l'invention référencé 10. D'après la figure 2, l'équipement 10 comporte au moins des moyens 12 de lecture d'une mémoire de données 13, une mémoire de programmes 14 et un processeur 15. La mémoire de données est par exemple constituée par un composant, un disque dur ou par un support amovible du type disque, cassette, disquette.... Elle peut aussi être intégrée dans un dispositif semi-conducteur ayant une ou plusieurs autres fonctions. Elle fait ou non partie de l'équipement 10. Elle contient le contenu multimédia MC. La mémoire de programmes 14 contient notamment un programme PG qui comporte des instructions pour implémenter les fonctionnalités qui ont été décrites en regard de la figure 1. Lorsqu'il est exécuté par le processeur 15, le programme PG génère une description DES, dans un langage de balisage, d'une structure SS d'un contenu multimédia MC stocké dans une mémoire de données. L'équipement 10 comporte également une interface utilisateur 16 comprenant un écran de visualisation 17 et des moyens 18 de pointage et de sélection sur l'écran 17. Les moyens 18 de pointage et de sélection sont par exemple constitués par une souris, ou par un clavier.

Dans un mode de réalisation particulièrement avantageux, l'écran de visualisation 17 est utilisé pour afficher une ou plusieurs fenêtres Fi (i=1, 2, ...) et une ou plusieurs barres de menu Mj (j=1, 2, ...). En particulier une fenêtre F1 au moins est consacrée à l'affichage d'une représentation visuelle d'au moins une partie d'une structure du contenu multimédia MC. Et une barre de menu M1 propose à l'utilisateur au moins certains moyens de manipulation graphique de la représentation visuelle affichée dans la fenêtre F1. A titre d'exemple, la barre de menu comporte une icône C1 permettant de couper une image préalablement sélectionnée dans la représentation visuelle, une icône C2 permettant de copier une image préalablement sélectionnée dans la représentation visuelle, et une icône C3 permettant de coller une image de la représentation visuelle qui a été préalablement coupée ou copiée.

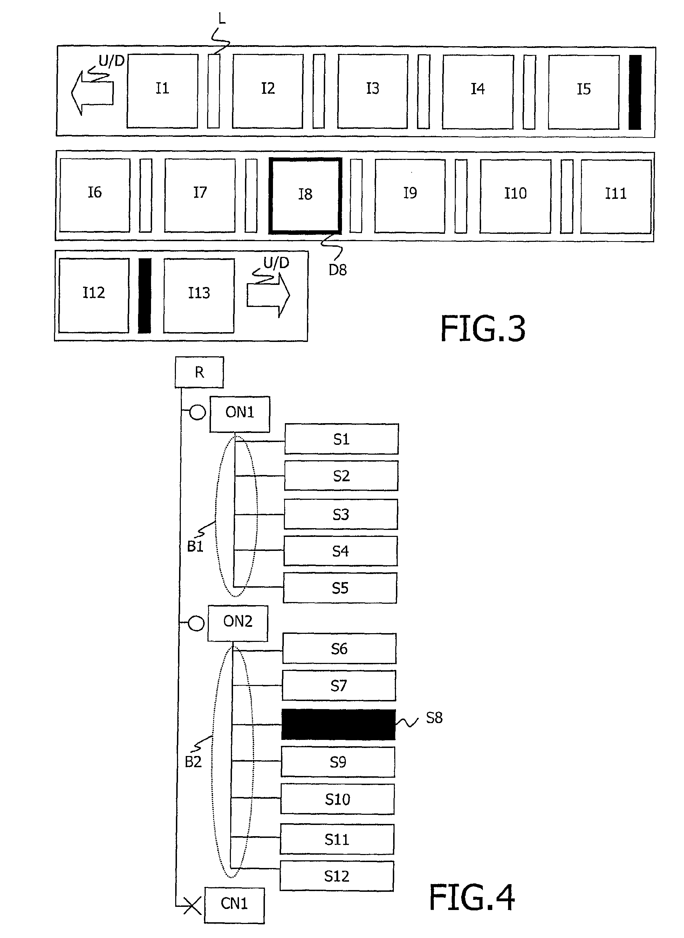

Sur la figure 3, on a représenté un exemple d'une telle représentation visuelle. La représentation visuelle de la figure 3 est constituée d'une séquence de treize images référencées I1 à I13. Chaque image de la séquence est représentative d'une prise de vue ou d'un ensemble de prises de vues.

Les images de la séquence sont séparées les unes des autres par des délimitations L qui sont activables et désactivables. Par exemple l'opérateur peut modifier l'état actif ou inactif d'une délimitation en la sélectionnant avec les moyens 18 de pointage et de sélection. Lorsque l'opérateur sélectionne une délimitation, la représentation à l'écran de cette délimitation est modifiée. Par exemple, une délimitation inactive est représentée par un rectangle ayant un fond transparent, alors qu'une délimitation active est représentée par un rectangle noir. Sur la figure 3, deux délimitations sont activées : la délimitation qui sépare les images I5 et I6, et la délimitation qui sépare les images I12 et I13.

Par ailleurs, une représentation graphique spécifique est avantageusement utilisée pour représenter la ou les images de la séquence qui sont sélectionnées à un instant donné. Par exemple, sur la figure 3, l'image sélectionnée 18 est encadrée dans un cadre D8.

De façon avantageuse un ascenseur U/D est prévu pour permettre de faire défiler la représentation visuelle affichée à l'écran afin de visualiser la partie souhaitée de la séquence d'images.

Dans un mode de réalisation avantageux, une autre fenêtre F2 est consacrée à l'affichage d'une représentation arborescente d'au moins une partie de la structure du contenu multimédia MC. Une telle représentation arborescente comporte une racine, des noeuds, des branches et des feuilles. Lorsque la structure a un niveau hiérarchique, chaque feuille est rattachée à la racine par l'intermédiaire d'un seul noeud. Avantageusement des moyens sont prévus pour développer ou résumer les branches de la représentation arborescente. Pour cela on distingue dans la représentation arborescente des noeuds ouverts et des noeuds fermés. Une branche résumée est représentée par un noeud fermé dans la représentation arborescente et par une seule image dans la représentation visuelle. Une branche développée est rattachée à un noeud ouvert dans la représentation arborescente. Lorsque la structure a un seul niveau hiérarchique, les branches développées portent des feuilles qui sont représentées chacune par une image dans la représentation visuelle. Lorsque la structure a plusieurs niveaux hiérarchiques, les branches développées peuvent aussi porter des noeuds, qui sont soit ouverts, soit fermés.

Lorsque l'opérateur modifie la représentation arborescente, la représentation visuelle est adaptée en conséquence.

De même, la représentation arborescente est mise à jour pour prendre en compte les modifications de structure apportées par l'opérateur sur la représentation visuelle affichée dans la fenêtre F1. En particulier, lorsqu'une délimitation est activée dans la représentation visuelle, un noeud est créé dans la représentation arborescente, et les feuilles qui représentent les images qui suivent ladite délimitation sont rattachés au noeud ainsi créé. Réciproquement lorsqu'une délimitation est désactivée dans la représentation visuelle, le noeud correspondant dans la représentation arborescente est supprimé, et les feuilles qui étaient préalablement rattachées au noeud supprimé sont rattachées au noeud qui précédait le noeud supprimé dans la représentation arborescente.

Ainsi, à tout instant, les vues données par les représentations arborescente et visuelle se correspondent.

Divers modes de réalisation sont envisageables. Par exemple dans un premier mode de réalisation, l'opérateur modifie l'état ouvert ou fermé d'un noeud en le sélectionnant avec les moyens 18 de pointage et de sélection. Lorsque l'opérateur développe une branche, les noeuds de cette branche sont soit initialement ouverts, soit initialement fermés. De plus, la barre de menu M1 comporte avantageusement une icône C4 permettant de définir un niveau de développement pour toute la structure arborescente.

De façon avantageuse les noeuds ouverts et les noeuds fermés ne sont pas représentés de la même manière : par exemple, les noeuds ouverts sont précédés d'un cercle, et les noeuds fermés sont précédés d'une croix.

Sur la figure 4, on a donné un exemple d'une représentation arborescente selon l'invention qui correspond à la représentation visuelle décrite à la figure 3. Cette représentation comporte une racine R, deux noeuds ouverts ON1 et ON2, et un noeud fermé CN1. Une branche B1 est rattachée au noeud ouvert ON1. Cette branche B1 porte cinq feuilles S1, S2, S3, S4 et S5 qui correspondent respectivement aux images I1 à I5 de la représentation visuelle. Une branche B2 est rattachée au noeud ouvert ON2. Cette branche B2 porte sept feuilles S6, S7, S8, S9, S10, S11 et S12 qui correspondent respectivement aux images I6 à I12 de la représentation visuelle. Enfin le noeud fermé CN1 correspond à l'image I13 de la représentation visuelle.

De façon avantageuse, une représentation spécifique est utilisée pour indiquer, dans la représentation arborescente, la ou les images qui sont sélectionnées. Sur la figure 4, l'image sélectionnée I8 est représentée par un rectangle noir, alors que les autres images qui ne sont pas sélectionnées sont représentées par un rectangle blanc.

Dans un autre mode de réalisation avantageux, une autre fenêtre F3 est consacrée à l'affichage de la description de la structure courante. Avantageusement cette description est une description MPEG-7, écrite dans le langage de balisage XML. A chaque noeud de la représentation arborescente correspond un élément « VideoSegment » dans la description MPEG-7. Chaque élément « VideoSegment » de la description MPEG-7 contient un certain nombre d'autres éléments dont certains sont utilisés pour annoter la description. Par exemple la norme MPEG-7 définit entre autres des éléments destinés à être utilisés pour décrire le type, l'objet, le sujet, le lieu, le temps, la raison de l'action, l'histogramme des couleurs utilisées, le mouvement de la caméra...

Certaines de ces informations doivent être saisies directement par l'opérateur, d'autres sont élaborées par des programmes dédiés (c'est le cas par exemple pour l'histogramme des couleurs, ou le mouvement de la caméra).

Avantageusement une fenêtre d'édition F4 est prévue pour saisir des informations ou pour lancer un programme destiné à générer des informations. Par exemple la fenêtre d'édition F4 comporte un onglet pour chaque type d'information susceptible d'être ajoutée dans la description DES. Sur la figure 2 on a représenté trois onglets référencés O1 à O3. La sélection d'un onglet qui correspond à des informations élaborées à partir d'un programme dédié, entraîne le lancement dudit programme dédié.

L'invention n'est pas limitée aux modes de réalisation qui viennent d'être décrits à titre d'exemple. En particulier :
- le nombre de fenêtres affichées simultanément est quelconque,
- de nombreuses variantes, facilement imaginables par l'homme du métier, sont possibles pour l'interface graphique et pour les outils de manipulation graphique,
- le nombre de niveaux hiérarchiques de la structure est quelconque ; lorsque la structure peut avoir plus d'un niveau hiérarchique, des moyens (par exemple des moyens graphiques) doivent être mis à la disposition de l'opérateur pour lui permettre de créer ou de supprimer un niveau hiérarchique ; de tels moyens sont facilement imaginables par l'homme du métier.

On a décrit un mode de réalisation préférentiel dans lequel, l'équipement selon l'invention comporte des moyens d'affichage d'une représentation visuelle, mais aussi des moyens d'affichage d'une représentation arborescente et des moyens d'affichage d'une description d'une structure courante.

Dans un autre mode de réalisation non préférentiel, l'équipement ne comporte que des moyens d'affichage de la représentation visuelle, des moyens graphiques de manipulation de la représentation visuelle affichée et des moyens de mise à jour de la description de la structure. Ce mode réalisation permet à l'opérateur de modifier la structure initiale fournie par l'outil d'extraction automatique. Il ne lui permet pas d'annoter la description.

## Revendications

1. Equipement (10) comportant des moyens pour générer une description (DES) dans un langage de balisage d'une structure d'un contenu multimédia (MC) comportant des prises de vue, **caractérisé en ce qu'**il comporte :
- des moyens d'affichage d'une représentation visuelle (VR) d'au moins une partie de ladite structure, ladite représentation visuelle comportant des images (I1-I13) représentatives de prises de vue,
- des moyens graphiques (14, 15, 17, 18, M1, F1-F4) de manipulation de ladite représentation visuelle pour apporter des modifications à ladite structure,
- des moyens (14, 15) de mise à jour de ladite description pour prendre en compte lesdites modifications.

2. Equipement électronique selon la revendication 1, **caractérisé en ce qu'**il comporte des moyens d'édition (F4, O1,-O3) pour annoter ladite description.

3. Equipement selon la revendication 1, **caractérisé en ce qu'**il comporte des moyens d'affichage d'une représentation arborescente (TR) d'au moins une partie de ladite structure et des moyens (14, 15) de mise à jour de ladite représentation arborescente pour prendre en compte lesdites modifications.

4. Equipement selon la revendication 3, **caractérisé en ce que** ladite représentation arborescente comportant des noeuds (ON1, ON2, CN1), des branches et des feuilles (S1-S12), il comporte des moyens pour développer ou pour résumer une ou plusieurs desdites branches, une branche résumée étant représentée par une image dans ladite représentation visuelle.

5. Méthode de génération d'une description (DES) dans un langage de balisage d'une structure d'un contenu multimédia comportant des prises de vue, **caractérisée en ce qu'**elle comporte une étape (AV) de manipulation d'une représentation visuelle (VR) d'au moins une partie de ladite structure, ladite représentation visuelle comportant des images (I1-I13) représentatives de prises de vue, en utilisant un outil graphique (M1, F1-F4, 17, 18), pour apporter des modifications à ladite structure, ladite description étant mise à jour automatiquement (UD) pour prendre en compte lesdites modifications.

6. Méthode selon la revendication 5 **caractérisée en ce qu'**elle comporte une étape (AD) d'annotation de ladite description en utilisant un outil d'édition.

7. Programme (PG) comportant des instructions pour générer une description (DES) dans un langage de balisage d'une structure d'un contenu multimédia (MC) comportant des prises de vue, lorsqu'il est exécuté par un processeur (15), **caractérisé en ce que** lesdites instructions comportent :
- des instructions pour afficher une représentation visuelle (VR) d'au moins une partie de ladite structure, ladite représentation visuelle comportant des images (I1-I13) représentatives de prises de vue,
- des instructions pour offrir à un utilisateur un outil graphique (17, 18, M1, F1-F4) de manipulation de ladite représentation visuelle pour apporter des modifications (AV) à ladite structure,
- des instructions pour mettre à jour ladite description (UD) pour prendre en compte lesdites modifications.

8. Programme selon la revendication 7, **caractérisé en ce que** lesdites instructions comportent des instructions pour offrir à un utilisateur un outil d'édition (F4, O1-O3) permettant d'annoter ladite description (AD).

9. Programme selon la revendication 7 **caractérisé en ce que** lesdites instructions comportent des instructions pour afficher une représentation arborescente (TR) d'au moins une partie de ladite structure, et des instructions pour mettre à jour ladite représentation arborescente (UT) pour prendre en compte lesdites modifications (AV).

10. Programme selon la revendication 9 **caractérisé en ce que**, ladite représentation arborescente comportant des noeuds (ON1, ON2, CN1), des branches et des feuilles (S1-S12), lesdites instructions comportent des instructions pour développer ou pour résumer une ou plusieurs desdites branches, une branche résumée étant par une image dans ladite représentation visuelle.
